# EUROPÄISCHE PATENTANMELDUNG

(11) **EP 4 108 694 A1**
(43) Veröffentlichungstag der Anmeldung: **28.12.2022**
(21) Anmeldenummer: 21180677.3
(22) Anmeldetag: 21.06.2021
(51) Int. Cl.: C08G 18/16, C08G 18/42, C08G 18/62, C08G 18/73, C08G 18/80, C09D 175/04

(54) **BESCHICHTUNGSMITTEL UND DARAUS ERHÄLTLICHE BESCHICHTUNGEN MIT VERBESSERTEN ANSCHMUTZUNGSRESISTENZEN UND (SELBST-)REINIGUNGSEIGENSCHAFTEN**

(71) Anmelder: Covestro Deutschland AG, 51373 Leverkusen (DE)
(72) Erfinder: WEIKARD, Jan, 51375 Leverkusen (DE); SIEGEMUND, Sven, 51399 Burscheid (DE); PAPADOPOULOU, Elisavet, 53842 Troisdorf (DE)
(74) Vertreter: Levpat

(57) **Zusammenfassung**

Die Erfindung betrifft Beschichtungsmittel enthaltend Aminosilangruppen- und/oder Mercaptosilangruppen-aufweisende Polyisocyanate, eine gelagerte Mischung aus Hydroxylgruppenhaltigen Verbindungen und Alkoxysilyl-funktionellen Siloxanen, sowie Katalysatoren für die Vernetzung von Silangruppen, die Herstellung dieser Beschichtungsmittel und die Verwendung zur Herstellung von Beschichtungen auf Substraten, im Besonderen Kunststoffsubstraten, beispielsweise solchen, wie sie in der Automobilindustrie Anwendung finden.

## Beschreibung

Die Erfindung betrifft Beschichtungsmittel enthaltend Aminosilangruppen- und/oder Mercaptosilangruppen-aufweisende Polyisocyanate, eine gelagerte Mischung aus Hydroxylgruppen-haltigen Verbindungen und Alkoxysilyl-funktionellen Siloxanen, sowie Katalysatoren für die Vernetzung von Silangruppen, die Herstellung dieser Beschichtungsmittel und die Verwendung zur Herstellung von Beschichtungen auf Substraten, im Besonderen Kunststoffsubstraten, beispielsweise solchen, wie sie in der Automobilindustrie Anwendung finden.

Aufgabe der vorliegenden Erfindung war es neue Beschichtungsmittel zur Verfügung zu stellen, die sich durch sehr gute Anschmutzungsresistenzen und (Selbst-)Reinigungseigenschaften auszeichnen sollten, und die sich im Besonderen zur Beschichtung von Substraten aus Kunststoffen eigenen sollten.

Diese Aufgabe konnte mit der Bereitstellung der nachfolgend näher beschriebenen erfindungsgemäßen Beschichtungsmittel, welche neben Aminosilangruppen- und/oder Mercaptosilangruppenaufweisenden Polyisocyanaten, eine gelagerte Mischung aus Hydroxylgruppen-haltigen Verbindungen und Alkoxysilyl-funktionellen Siloxanen enthalten, gelöst werden.

Aus der WO2017/202692 sind Beschichtungsmittel und daraus erhältliche Beschichtungen mit verbesserten Anschmutzungsresistenzen und (Selbst)reinigungseigenschaften bekannt, die unter Verwendung von Aminosilan-funktionalisierten Isocyanaten in Kombination mit Hydroxylgruppen-haltigen Verbindungen und Alkoxysilyl-funktionellen Siloxanen erhältlich sind. Die Verwendung einer gelagerten Mischung aus Hydroxylgruppen-haltigen Verbindungen und Alkoxysilyl-funktionellen Siloxanen wird nicht erwähnt oder nahegelegt.

Gegenstand der vorliegenden Erfindung sind zwei-komponentige Beschichtungsmittel aus
einer ersten Komponente (I), enthaltend oder bestehend aus
(A) mindestens eine/r Polyisocyanatkomponente, erhältlich durch Umsetzung
   (A1) mindestens eines Polyisocyanats mit
   (A2) mindestens einer gegenüber Isocyanatgruppen reaktiven Verbindung der allgemeinen Formel (I) 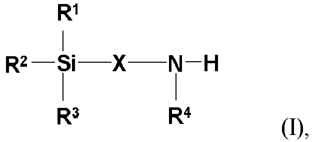 in welcher
      - R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
      - X: für einen linearen oder verzweigten organischen Rest mit mindestens 2 Kohlenstoffatomen steht, der gegebenenfalls bis zu 2 Iminogruppen (-NH-) enthalten kann,
      - R⁴: für Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen steht oder für
      i) einen Rest der Formel 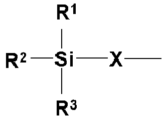 steht, in welchem R¹, R², R³ und X die vorstehend angegebene Bedeutung haben, oder
      ii) einen Rest der Formel 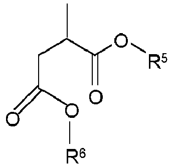 steht, in welchem R⁵ und R⁶ unabhängig voneinander gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen können,
      iii) einen Rest der Formel 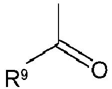 steht, in welcher R⁹ für Wasserstoff oder einen gesättigten linearen oder verzweigten, aliphatischen oder cycloaliphatischen organischen Rest mit 1 bis 8 Kohlenstoffatomen steht,
      oder der allgemeinen Formel (II) 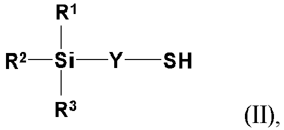
      in welcher R¹, R² und R³ die für Formel (I) genannte Bedeutung haben und
      Y für einen linearen oder verzweigten organischen Rest mit mindestens 2 Kohlenstoffatomen steht,
(B) gegebenenfalls einen/einem oder mehrere/n Katalysatoren für die Vernetzung von Silangruppen,
und einer zweiten Komponente (II), enthaltend oder bestehend aus
(C) mindestens eine/r Hydroxylgruppen-haltige/n Verbindung,
(D) mindestens ein/em Alkoxysilyl-funktionelles/en Siloxan der Formel (III)

   R¹⁰-SiR¹¹₂-Aₓ-B_{y}-O-SiR¹²₂-R¹³ (III),

   worin A eine Gruppe -[O-SiR¹⁴₂]- und B eine Gruppe -[O-SiR¹⁵R¹⁶]- ist,
   R¹¹, R¹², R¹⁴ und R¹⁵ unabhängig voneinander lineare oder verzweigte Alkylgruppen mit 1 bis 4 Kohlenstoffatomen sind,
   R¹⁰, R¹³ und R¹⁶ unabhängig voneinander eine Gruppe -L-R¹⁷ sind, worin L = eine lineare oder verzweigte 2-bindige Alkylgruppe und
   R¹⁷ = H oder -Si(R¹⁸)_{z}(OR¹⁹)_{3-z}mit R¹⁸, R¹⁹ = eine lineare oder verzweigte Alkylgruppe mit 1 bis 4 Kohlenstoffatomen und z = 0, 1, oder 2, bevorzugt z = 0, ist,
   mit der Vorgabe, das mindestens einer der Reste R¹⁰ oder R¹³ und/oder mindestens eine Gruppe B eine Gruppe R¹⁷ = -Si(R¹⁸)_{z}(OR¹⁹)_{3-z} beinhaltet, x unabhängig für eine ganze Zahl von 1 -20 steht, und
   y unabhängig für eine ganze Zahl von 0-10 steht,
   wobei bevorzugt x+y ≤ 20 ist,
   und
(B') gegebenenfalls einen/einem oder mehrere/n Katalysatoren für die Vernetzung von Silangruppen,
wobei Komponente II durch eine wenigstens (≥) 5-stündige Lagerung einer Mischung aus C und D erhalten wird und
wobei in wenigstens einer der beiden Komponenten I und II mindestens ein Katalysator für die Vernetzung von Silangruppen (B bzw. B') enthalten ist, und B', sofern in Komponente II vorhanden, in der Mischung aus C und D zu Beginn von deren Lagerung bereits enthalten ist, oder der Mischung aus C und D während deren Lagerung beigemischt wird, oder ein Teil von B' in der Mischung aus C und D zu Beginn von deren Lagerung bereits enthalten ist und ein weiterer Teil während der Lagerung der Mischung beigemischt wird.

### Polyisocanatkomponente A

### Polyisocyanat A1

Als Ausgansgverbindungen A1 zur Herstellung der Polyisocyanatkomponente A geeignet sind beliebige monomere Diisocyanate der mit aliphatisch, cycloaliphatisch, araliphatisch und/oder aromatisch gebundenen Isocyanatgruppen geeignet, die nach beliebigen Verfahren, z. B. durch Phosgenierung oder auf phosgenfreiem Weg, beispielsweise durch Urethanspaltung, hergestellt werden können.

Geeignete monomere Diisocyanate sind beispielsweise solche der allgemeinen Formel (IV)

OCN-Z-NCO (IV),

in welcher Z für einen linearen oder verzweigten, aliphatischen oder cycloaliphatischen Rest mit bis zu 18 Kohlenstoffatomen, bevorzugt 4 bis 18 Kohlenstoffatomen oder einen gegebenenfalls substituierten aromatischen oder araliphatischen Rest mit bis zu 18 Kohlenstoffatomen, bevorzugt 5 bis 18 Kohlenstoffatomen steht, wie z. B. 1,4-Diisocyanatobutan, 1,5-Diisocyanatopentan (PDI), 1,6-Diisocyanatohexan (HDI), 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3 -Diisocyanato-4-methylcyclohexan, 1-Isocyanato-3,3,5 -trimethyl-5 - isocyanatomethylcyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H₁₂-MDI), 1,3- und 1,4-Bis(isocyanatomethyl)cyclohexan, 4,4'-Diisocyanato-3,3'-dimethyldicyclohexylmethan, 4,4' Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1,3- und 1,4-Bis-(isocyanatomethyl)benzol, 1,3- und 1,4-Bis(1-isocyanato-1-methylethyl)-benzol (TMXDI), Bis(4-(1-isocyanato-1-methylethyl)phenyl)-carbonat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate. Weitere ebenfalls geeignete Diisocyanate finden sich darüberhinaus beispielsweise in Justus Liebigs Annalen der Chemie Band 562 (1949) S. 75 - 136.

Besonders bevorzugt sind monomere Diisocyanate der allgemeinen Formel (IV), in welcher Z für einen linearen oder verzweigten, aliphatischen oder cycloaliphatischen Rest mit 5 bis 13 Kohlenstoffatomen steht.

Ganz besonders bevorzugte monomere Diisocyanate zur Herstellung der Polyisocyanatkomponente A sind 1,5-Diisocyanaotpentan, 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebige Gemische dieser Diisocyanate.

Als Ausgansgverbindungen A1 zur Herstellung der Polyisocyanatkomponente A geeignet sind, neben den oben genannten monomeren Diisocyanaten, auch beliebige durch Modifizierung von monomeren aliphatischen, cycloaliphatischen, araliphatischen und/oder aromatischen Diisocyanaten erhältliche oligomere Di- und Polyisocyanate mit Uretdion-, Isocyanurat-, Urethan-, Allophanat-, Thiourethan-, Thioallophanat-, Biuret-, Harnstoff-, Iminooxadiazindion- und/oder Oxadiazintrionstruktur oder beliebige Gemische dieser oligomeren Di- und Polyisocyanate. Die Herstellung dieser oligomeren Verbindungen erfolgt nach an sich bekannten Methoden zur Isocyanatoligomerisierung, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 sowie in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 und JP 56059828 beispielhaft beschrieben sind. Als monomere Diisocyanate können beispielsweise die zuvor aufgelisteten Diisocyanate eingesetzt werden. Es gelten die dort genannten Vorzugsbereiche.

### Gegenüber Isocyanatgruppen reaktive (kurz auch Isocyanat-reaktive) Verbindungen A2

Geeignete Ausgangsverbindungen A2 zur Herstellung der Polyisocyanatkomponente A sind beispielsweise Aminosilane, der allgemeinen Formel (I) 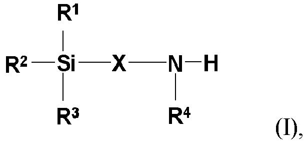 in welcher
- R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
- X: für einen linearen oder verzweigten organischen Rest mit mindestens 2 Kohlenstoffatomen steht, der gegebenenfalls bis zu 2 Iminogruppen (-NH-) enthalten kann,
und
- R⁴: für Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen steht oder für
i) einen Rest der Formel 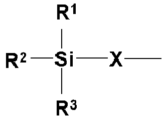 steht, in welchem R¹, R², R³ und X die vorstehend angegebene Bedeutung haben, oder
ii) einen Rest der Formel 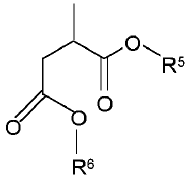 steht, in welchem R⁵ und R⁶ unabhängig voneinander gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen können,
iii) einen Rest der Formel 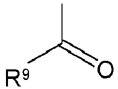 steht, in welcher R⁹ für Wasserstoff oder einen gesättigten linearen oder verzweigten, aliphatischen oder cycloaliphatischen organischen Rest mit 1 bis 8 Kohlenstoffatomen steht.

Geeignete Aminosilane der allgemeinen Formel (I) sind beispielsweise 3-Aminopropyltrimethoxysilan, 3-Amino-propyltriethoxysilan, 3-Aminopropylmethyldimethoxysilan, 3-Aminopropylmethyldiethoxysilan, 3-Aminopropylethyldiethoxysilan, 3-Aminopropyldimethylethoxysilan, 3-Aminopropyldiisopropylethoxysilan, 3 -Aminopropyltripropoxysilan, 3 -Aminopropyltributoxysilan, 3 -Aminopropylphenyldiethoxysilan, 3 -Aminopropylphenyldimethoxysilan, 3 -Aminopropyl-tris(methoxyethoxyethoxy)silan, 2-Aminoisopropyltrimethoxysilan, 4-Aminobutyltrimethoxysilan, 4-Aminobutyltriethoxysilan, 4-Aminobutylmethyldimethoxysilan, 4-Aminobutylmethyldiethoxysilan, 4-Aminobutylethyldimethoxysilan, 4-Aminobutylethyldiethoxysilan, 4-Aminobutyldimethylmethoxysilan, 4-Aminobutylphenyldimethoxysilan, 4-Aminobutylphenyldiethoxysilan, 4-Amino(3 -methylbutyl)methyldimethoxysilan, 4-Amino(3 -methylbutyl)methyldiethoxysilan, 4-Amino(3 -methylbutyl)trimethoxysilan, 3 -Aminopropylphenylmethyl-n-propoxysilan, 3 -Aminopropylmethyldibutoxysilan, 3 -Aminopropyldiethylmethylsilan, 3 -Aminopropylmethyl-bis(trimethylsiloxy)silan, 11-Aminoundecyltrimethoxysilan, N-Methyl-3-aminopropyltrimethoxysilan, N-Methyl-3-aminopropyltriethoxysilan, N-(n-Butyl)-3-aminopropyltrimethoxysilan, N-(n-Butyl)-3-aminopropyltriethoxysilan, N-(2-Aminoethyl)-3-aminopropyltrimethoxysilan, N-(2-Aminoethyl)-3-aminoisobutylmethyldimethoxysilan, N-(2-Aminoethyl)-3-aminopropylmethyldimethoxysilan, N-(2-Aminoethyl)-3-aminopropyltris(2-ethylhexoxy)silan, N-(6-Aminohexyl)-3-aminopropyltrimethoxysilan, N-Benzyl-N-(2-aminoethyl)-3-aminopropyltrimethoxysilan, Bis(3-trimethoxysilylpropyl)amin, Bis(3-triethoxysilylpropyl)amin, (Aminoethylaminomethyl)-phenethyltrimethoxysilan, N-Vinylbenzyl-N-(2-aminoethyl)-3-aminopropylpolysiloxan, N-Vinylbenzyl-N(2-aminoethyl)-3-aminopro-pylpolysiloxan, 3-Ureidopropyltriethoxysilan, 3-(m-Aminophenoxy)-propyltrimethoxysilan, m- und/oder p-Aminophenyltrimetoxysilan, 3-(3-Amino-propoxy)-3,3 -dimethyl-1-propenyltrimethoxysilan, 3 -Aminopropylmethylbis(trimethylsiloxy)-silan, 3-Aminopropyltris(trimethyl-siloxy)-silan, 3-Aminopropylpentamethyldisiloxan oder beliebige Gemisch solcher Aminosilane.

Darunter bevorzugt sind Aminosilane der allgemeinen Formel (I), in welcher
- R¹, R² und R³: jeweils Alkylreste mit bis zu 6 Kohlenstoffatomen und/oder Alkoxyreste, die bis zu 3 Sauerstoffatome enthalten, bedeuten, mit der Maßgabe, dass mindestens einer der Reste R¹, R² und R³ für einen solchen Alkoxyrest steht,
- X: für einen linearen oder verzweigten organischen Rest mit mindestens 2 Kohlenstoffatomen steht, und
- R⁴: für einen gesättigten, linearen oder verzweigten, aliphatischen oder cycloaliphatischen Rest mit bis zu 6 Kohlenstoffatomen oder einen Rest der Formel 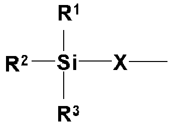 steht, in welchem R¹, R², R³ und X die vorstehend angegebene Bedeutung haben.

Darunter besonders bevorzugte sind Aminosilane der allgemeinen Formel (I), in welcher
- R¹, R² und R³: jeweils Methyl, Methoxy und/oder Ethoxy bedeuten, mit der Maßgabe, dass mindestens einer der Reste R¹, R² und R³ für einen Methoxy- oder Ethoxyrest steht,
- X: für einen Propylenrest (-CH₂-CH₂-CH₂-) steht, und
- R⁴: für einen linearen Alkylrest mit bis zu 4 Kohlenstoffatomen oder einen Rest der Formel 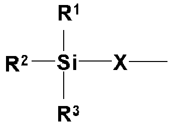 steht, in welchem R¹, R², R³ und X die vorstehend angegebene Bedeutung haben.

Darunter ganz besonders bevorzugt sind N-Methyl-3-aminopropyltrimethoxysilan, N-Methyl-3-aminopropyltriethoxysilan, N-(n-Butyl)-3-aminopropyltrimethoxysilan, N-(n-Butyl)-3-amino-propyltriethoxysilan, Bis(3-trimethoxysilylpropyl)-amin und/oder Bis(3-triethoxysilylpropyl)amin.

Bevorzugte Aminosilane der allgemeinen Formel (I) sind beispielsweise auch solche, bei denen
- R⁴: für einen Rest der Formel 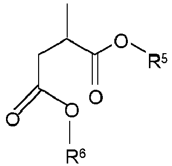 steht, in welcher
R¹, R² und R³ jeweils Alkylreste mit bis zu 6 Kohlenstoffatomen und/oder Alkoxyreste, die bis zu 3 Sauerstoffatome enthalten, bedeuten, mit der Maßgabe, dass mindestens einer der Reste R¹, R² und R³ für einen solchen Alkoxyrest steht,
X für einen linearen oder verzweigten organischen Rest mit mindestens 2 Kohlenstoffatomen steht, und
R⁵ und R⁶ unabhängig voneinander gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen.

Darunter besonders bevorzugt sind Aminosilane der allgemeinen Formel (I), in welcher
- R⁴: für einen Rest der Formel 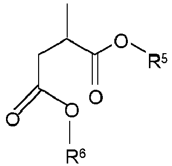 steht, in welcher
R¹, R² und R³ jeweils Methyl, Methoxy und/oder Ethoxy bedeuten, mit der Maßgabe, dass mindestens einer der Reste R¹, R² und R³ für einen Methoxy- oder Ethoxyrest steht,
X für einen Propylenrest (-CH₂-CH₂-CH₂-) steht, und
R⁵ und R⁶ unabhängig voneinander für einen Methyl-, Ethyl-, n-Butyl- oder 2-Ethylhexylrest stehen.

Bei diesen Aminosilanen handelt es sich um die bekannten silanfunktionellen Asparaginsäureester, wie sie sich nach der Lehre der EP-A 0 596 360 durch Umsetzung von primäre Aminogruppen tragenden Aminosilanen mit Fumarsäureestern und/oder Maleinsäureestern erhalten lassen.

Geeignete Ausgangsverbindungen zu Herstellung dieser silanfunktionellen Asparaginsäureester sind daher grundsätzlich beliebige Aminosilane der allgemeinen Formel (I) 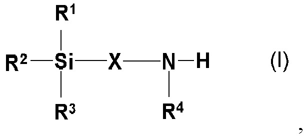 in welcher R¹, R², R³ und X die für Formel (I) genannte Bedeutung haben und R⁴ für Wasserstoff steht.

Diese werden mit Fumarsäurediestern und/oder Maleinsäurediestern der allgemeinen Formel (V)

R⁵OOC-CH=CH-COOR⁶ (IV)

, umgesetzt, in welcher die Reste R⁵ und R⁶ die oben genannte Bedeutung haben.

Ganz besonders bevorzugte silanfunktionellen Asparaginsäureester sind Umsetzungsprodukte von 3-Aminopropyltrimethoxysilan und/oder 3-Aminopropyltriethoxysilan mit Maleinsäurediethylester.

Bevorzugte Aminosilane der allgemeinen Formel (I) sind weiterhin auch solche, bei denen
- R⁴: für einen Rest der Formel 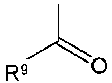 steht, in welcher
R¹, R² und R³ jeweils Alkylreste mit bis zu 6 Kohlenstoffatomen und/oder Alkoxyreste, die bis zu 3 Sauerstoffatome enthalten, bedeuten, mit der Maßgabe, dass mindestens einer der Reste R¹, R² und R³ für einen solchen Alkoxyrest steht,
X für einen linearen oder verzweigten organischen Rest mit mindestens 2 Kohlenstoffatomen steht, und
R⁹ für Wasserstoff oder einen gesättigten linearen oder verzweigten, aliphatischen oder cycloaliphatischen organischen Rest mit 1 bis 8 Kohlenstoffatomen steht.

Darunter besonders bevorzugt sind Aminosilane der allgemeinen Formel (I), in welcher
- R⁴: für einen Rest der Formel 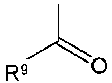 steht, in welcher
R¹, R² und R³ jeweils Methyl, Methoxy und/oder Ethoxy bedeuten, mit der Maßgabe, dass mindestens einer der Reste R¹, R² und R³ für einen Methoxy- oder Ethoxyrest steht,
X für einen Propylenrest (-CH₂-CH₂-CH₂-) steht, und
R⁹ für Wasserstoff steht.

Bei diesen Aminosilanen handelt es sich um die bekannten silanfunktionellen Alkylamide, wie sie sich beispielsweise nach den in US 4 788 310 und US 4 826 915 offenbarten Verfahren durch Umsetzung von primäre Aminogruppen tragenden Aminosilanen mit Alkylcarbonsäurealkylestern unter Alkoholabspaltung erhalten lassen.

Geeignete Ausgangsverbindungen zur Herstellung silanfunktionellen Alkylamide sind daher grundsätzlich beliebige Aminosilane der allgemeinen Formel (I) 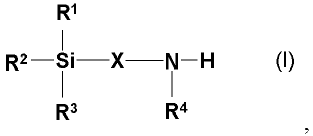 in welcher R¹, R², R³ und X die für Formel (I) genannte Bedeutung haben und R⁴ für Wasserstoff steht.

Diese werden mit Alkylcarbonsäurealkylestern der allgemeinen Formel (VI)

R⁹-COOR²⁰ (IV),

umgesetzt, in welcher
- R⁹: die oben genannte Bedeutung hat und
- R²⁰: für einen gesättigten aliphatischen organischen Rest mit 1 bis 4 Kohlenstoffatomen steht.

Ganz besonders bevorzugte silanfunktionelle Alkylamide sind Umsetzungsprodukte von 3-Aminopropyltrimethoxysilan und/oder 3-Aminopropyltriethoxysilan mit Methylformiat und/oder Ethylformiat.

Geeignete Ausgangsverbindungen A2 zur Herstellung der Polyisocyanatkomponente A sind auch Mercaptosilane der allgemeinen Formel (II) 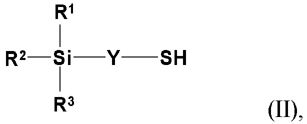
in welcher R¹, R² und R³ die für Formel (I) genannte Bedeutung haben und
Y für einen linearen oder verzweigten organischen Rest mit mindestens 2 Kohlenstoffatomen steht.

Geeignete Mercaptosilane A2 sind beispielsweise 2-Mercaptoethyltrimethylsilan, 2-Mercaptoethylmethyldimethoxysilan, 2-Mercaptoethyltrimethoxysilan, 2-Mercaptoethyltriethoxysilan, 3-Mercaptopropylmethyldimethoxysilan, 3-Mercaptopropyldimethylmethoxysilan, 3 -Mercaptopropyltrimethoxysilan, 3-Mercaptopropylmethyldiethoxysilan, 3-Mercaptopropyltriethoxysilan, 3-Mercaptopropylethyldimethoxysilan, 3-Mercaptopropylethyldiethoxysilan und/oder 4-Mercaptobutyltrimethoxysilan.

Bevorzugte Mercaptosilane A2 für das erfindungsgemäße Verfahren sind solche der allgemeinen Formel (II), in welcher
- R¹, R² und R³: für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann, und
- Y: für einen linearen oder verzweigten Alkylenrest mit 2 bis 10 Kohlenstoffatomen steht.

Besonders bevorzugte Mercaptosilane A2 sind solche der allgemeinen Formel (II), in welcher
- R¹, R² und R³: jeweils Alkylreste mit bis zu 6 Kohlenstoffatomen und/oder Alkoxyreste, die bis zu 3 Sauerstoffatomen enthalten, bedeuten, mit der Maßgabe, dass mindestens einer der Reste R¹, R² und R³ für einen solchen Alkoxyrest steht, und
- Y: für einen Propylenrest (-CH₂-CH₂-CH₂-) steht.

Ganz besonders bevorzugte Mercaptosilane A2 sind solche der allgemeinen Formel (II), in welcher
- R¹, R² und R³: für gleiche oder verschiedene Reste stehen und jeweils Methyl, Methoxy oder Ethoxy bedeuten, mit der Maßgabe, dass mindestens einer der Reste R¹, R² und R³ für einen Methoxy- oder Ethoxyrest steht, und
- X: für einen Propylenrest (-CH₂-CH₂-CH₂-) steht,
insbesondere 3-Mercaptopropyltrimethoxysilan und/oder 3-Mercaptopropyltriethoxysilan.

Zur Herstellung der Polyisocyanatkomponente A werden die Polyisocyanate A1 mit den Isocyanat-reaktiven Verbindungen A2 bei Temperaturen von 20 bis 200 °C, vorzugsweise 30 bis 160 °C umgesetzt.

Die Herstellung erfolgt bevorzugt unter Einhaltung eines Äquivalentverhältnisses von Isocyanatgruppen zu gegenüber Isocyanaten reaktiven Gruppen von 50 : 1 bis 1,05 : 1, vorzugsweise von 30 : 1 bis 1,25 : 1, besonders bevorzugt 20 : 1 bis 1,5 : 1.

Die Herstellung der Polyisocyanatkomponente A kann lösemittelfrei durchgeführt werden. Gegebenenfalls können aber auch geeignete, gegenüber den reaktiven Gruppen der Ausgangskomponenten inerte Lösemittel mitverwendet werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat (MPA), 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

Die Umsetzung der Ausgangskomponenten A1 und A2 kann mit oder ohne den Einsatz von Katalysatoren durchgeführt werden. Insbesondere bei Einsatz von Mercaptosilanen (Formel II) jedoch kann es von Vorteil sein, zur Beschleunigung der SH-NCO-Reaktion, welche zur Ausbildung von Thiourethan- und/oder Thioallophanatstrukturen führt, geeignete Katalysatoren mitzuverwenden. Geeignete Katalysatoren sind insbesondere die üblichen aus der Polyurethanchemie bekannten Urethanisierungs- und Allophanatisierungskatalysatoren.

Beispielhaft genannt seien hier tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,2-Dimethylimidazol, 2-Methylimidazol, N,N-Dimethylimidazol-β-phenylethylamin, 1,4-Diazabicyclo-(2,2,2)-octan (DABCO) und Bis-(N,N-dimethylaminoethyl)adipat, Amidine, wie z. B. 1,5-Diazabicyclo[4.3.0]nonen (DBN), 1,8-Diazabicyclo(5.4.0)undecen-7 (DBU) und 2,3-Dimethyl-3,4,5,6-tetrahydropyrimidin, Alkanolaminverbindungen, wie z. B. Triethanolamin, Triisopropanolamin, N-Methyl-diethanolamin, N-Ethyl-diethanolamin, Dimethylaminoethanol und 2-(N,N-Dimethylaminoethoxy)ethanol, N,N',N"-Tris-(dialkylaminoalkyl)hexahydrotriazine, wie z. B. N,N',N"-Tris-(dimethylaminopropyl)-s-hexahydrotriazin, Bis(dimethylaminoethyl)ether sowie Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)- Wismut(III)-2-ethylhexanoat, Wis-mut(III)-octoat, Wismut(III)-neodecanoat, Zinkchlorid, Zink-2-ethylcaproat, Zink-(II)-stearat, Zink-(II)-n-octanoat, Zink-(II)-2-ethyl-1-hexanoat, Zink-(II)-naphthenat oder Zink-(II)-acetylacetonat, Zinn(II)-octoat, Zinn(II)-ethylcaproat, Zinn(II)-palmitat, Zinn-(II)-laurat, Dibutylzinn(IV)-dilaurat (DBTL), Dibutylzinn(IV)-dichlorid, Zinn-(II)-2-ethyl-1-hexanoat, Dibutylzinnoxid, Dibutylzinndiacetat, Dibutylzinndimaleat oder Dioctylzinndiacetat, Bleioctoat, Zirconiumverbindungen, wie z. B. Zirconium-(IV)-2-ethyl-1-hexanoat, Zirconium-(IV)-neodecanoat, Zirconium-(IV)-naphthenat oder Zirconium-(IV)-acetylacetonat, Aluminium-tri(ethylacetoacetat), Kaliumoctoat, Mangan- Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Zur Beschleunigung der Thiourethanisierungsreaktion bevorzugt einzusetzende Katalysatoren sind tertiäre Amine, Amidine und Zinnverbindungen der genannten Art. Besonders bevorzugt sind 1,4-Diazabicyclo-(2,2,2)-octan (DABCO), 1,5-Diazabicyclo[4.3.0]nonen (DBN), 1,8-Diazabicyclo(5.4.0)undecen-7 (DBU), sowie Dibutylzinn(IV)-dilaurat (DBTL), oder beliebige Gemische dieser Katalysatoren.

Falls Katalysatoren zur Beschleunigung der Thiourethanisierungsreaktion eingesetzt werden, so kommen diese in Mengen von 0,001 bis 1,0 Gew.-%, bevorzugt 0,01 bis 0,5 Gew.-%, berechnet als Gesamtmenge an eingesetzten Katalysatoren bezogen auf die Gesamtmenge der verwendeten Polyisocyanate A1 und Mercaptosilane A2 zum Einsatz.

Zur Beschleunigung der Thioallophanatisierungsreaktion bevorzugt einzusetzende Katalysatoren sind Zink- und Zirconiumverbindungen der obengenannten Art. Ganz besonders bevorzugt ist Zink-(II)-n-octanoat, Zink-(II)-2-ethyl-1-hexanoat und/oder Zink-(II)-stearat, Zirconium-(IV)-n-octanoat, Zirconium-(IV)-2-ethyl-1-hexanoat und Zirconium-(IV)-neodecanoat, oder beliebige Gemische dieser Katalysatoren.

Falls Katalysatoren zur Beschleunigung der Thioallophanatisierungsreaktion eingesetzt werden, so kommen diese in Mengen von 0,001 bis 5 Gew.-%, vorzugsweise 0,005 bis 1 Gew.-%, berechnet als Gesamtmenge an eingesetzten Katalysatoren bezogen auf die Gesamtmenge der verwendeten Polyisocyanate A1 und Mercaptosilane A2 zum Einsatz.

Detaillierte Syntheserouten zur Synthese von Polyisocyanatkomponenten gemäß A auf Basis der Umsetzung von Mercaptosilanen gemäß Formel II (A2) mit Polyisocyanten gemäß Komponente A1 unter Bildung von Thiourethanstrukturen, bzw. Thioallophanatstrukturen sind in der EP-B 2892905 bzw. der WO15/189164 beschreiben, auf die an dieser Stelle verwiesen wird.

In einer bevorzugten Ausführungsform weist die mindestens eine Polyisocyanatkomponente A Thioallophanatstrukturen auf.

In einer besonders bevorzugten Ausführungsform weist die mindestens eine Polyisocyanatkomponente A Thioallophanatstrukturen auf, die auf der Umsetzung von monomerem aliphatischem Diisocyanat mit einem Mercaptosilan der Formel II basieren.

In einer ganz besonders bevorzugten Ausführungsform ist das monomere aliphatische Diisocyanat PDI und/oder HDI. In einer alternativen ganz besonders bevorzugten Ausführungsform ist das Mercaptosilan Mercaptopropyltrimethoxysilan. Am meisten bevorzugt werden als monomeres Diisocyanat HDI und als Mercaptosilan Mercaptopropyltrimethoxysilan eingesetzt.

Die Polyisocyanatkomponenten A weisen bevorzugt einen NCO-Gehalt von 1,3 bis 24,9 Gew.-%, besonders bevorzugt von 4,0 bis 23,5 Gew.-%, ganz besonders bevorzugt von 5,0 bis 21,0 Gew.-%, und eine mittlere NCO-Funktionalität bevorzugt von 1,0 bis 4,9, besonders bevorzugt von 1,8 bis 4,8, ganz besonders bevorzugt von 2,0 bis 4,0 auf.

### Katalysatoren zur Vernetzung von Silangruppen B und B'

Die erfindungsgemäßen Beschichtungsmittel enthalten bevorzugt mindestens einen Katalysator zur Vernetzung von Silangruppen. Dieser kann in der ersten oder der zweiten Beschichtungsmittelkomponente oder in beiden Beschichtungsmittelkomponenten enthalten sein. Im letztgenannten Fall können in beiden Komponenten der gleiche bzw. gleiche oder unterschiedliche Katalysatoren enthalten sein.

Bei diesen Katalysatoren handelt es sich um beliebige Verbindungen, die in der Lage sind, die Hydrolyse und Kondensation von Alkoxysilangruppen oder bevorzugt die thermisch induzierte Silankondensation zu beschleunigen.

Geeignete Katalysatoren B, bzw. B' sind beispielsweise Säuren, wie z. B. organische Carbonsäuren, Schwefelsäure, p-Toluolsulfonsäure, Trifluormethansulfonsäure, Dodecylbenzolsulfonsäure, Essigsäure, Trifluoressigsäure, Phosphorsäuremonoester und Phosphorsäurediester, wie z. B. Dibutylphosphat, Phosphorsäure-2-ethylhexylester, Phosphorsäurephenylester und Phosphorsäure-bis(2-ethylhexyl)ester, sowie Phosphonsäurediester und Diphosphonsäurediester, wie sie z. B. in der WO 2007/033786 beschrieben sind.

Als Katalysatoren B, bzw. B' ebenfalls geeignet sind auch Basen, wie z. B. die N-substituierten Amidine 1,5-Diazabicyclo[4.3.0]non-5-en (DBN) und 1,5-Diazabicyclo[5.4.0]undec-7-en (DBU), oder auch Metallsalze und Metallchelate, wie z. B. Tetraisopropyltitanat, Tetrabutyltitanat, Titan(IV)acetylacetonat, Aluminium-tri-sec-butylat, Aluminiumacetylacetonat, Aluminiumtriflat, Zinntriflat oder Zirkonethylacetoacetat, wie sie z. B. in WO 2006/042658 beschrieben sind.

Geeignete Katalysatoren B, bzw. B' sind auch Phosphorsäure- und Phosphonsäureester der oben genannten Art, die in mit Aminen, vorzugsweise mit tertiären Aminen blockierter Form vorliegen. Besonders bevorzugte Katalysatoren dieses Typs sind solche, die im Temperaturbereich der Aushärtung von Automobildeck- und -klarlacken, beispielsweise im Bereich von 100 bis 150°C unter Abspaltung des Blockierungsamins die sauren Phosphorsäure- und Phosphonsäureester wieder freisetzen, die die eigentlich wirksame Katalysatoren darstellen. Geeignete aminblockierte Phosphorsäurekatalysatoren B, bzw. B' sind beispielsweise in WO 2008/074489 und WO 2009/077180 beschrieben.

Ebenfalls geeignete Katalysatoren B, bzw. B' sind organische Sulfonsäuren der oben genannten Art, die in blockierter Form, beispielsweise in amin-neutralisierter Form oder als Addukt an Epoxiden, wie in der DE 2 356 768 B1 beschrieben, eingesetzt werden und oberhalb von 100°C die katalytisch aktiven Sulfonsäuren wieder freisetzen.

Weitere zur Vernetzung von Silangruppen geeignete Katalysatoren B, bzw. B' sind auch Tetraalkylammoniumcarboxylate, wie z. B. Tetramethylammoniumformiat, Tetramethylammonium - acetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammonium-propionat, Tetrapropylammoniumbutyrat, Tetrapropylammonium-benzoat, Tetrabutylammoniumformiat, Tetrabutylammoniumacetat, Tetrabutylammoniumpropionat, Tetrabutylammoniumbutyrat und/oder Tetrabutylammoniumbenzoat.

Zur Vernetzung von Silangruppen geeignete Katalysatoren B, bzw. B' sind auch quaternäre Ammonium- und Phosphoniumpolyfluoride, wie sie z. B. aus der EP-A0 798 299, EP-A0 896 009 und EP-A0 962 455 als Trimerisierungskatalysatoren für Isocyanatgruppen bekannt sind.

Geeignete Katalysatoren B, bzw. B' sind schließlich auch Zink-Amidin-Komplexe, die nach dem Verfahren der WO 2014/016019 durch Umsetzung eines oder mehrerer Zink(II)biscarboxylate mit Amidinen hergestellt werden können.

Bevorzugte Katalysatoren B, bzw. B' zur Vernetzung von Silangruppen sind saure Phosphorsäureester, Phosphonsäureester und Sulfonsäuren der genannten Art, die gegebenenfalls in mit Aminen blockierter Form vorliegen können, sowie Tetraalkylammoniumcarboxylate der genannten Art. Besonders bevorzugte Katalysatoren B, bzw. B' sind mit Aminen blockierte Phosphorsäureester und Sulfonsäuren sowie die genannten Tetraalkylammoniumcarboxylate. Ganz besonders bevorzugte Katalysatoren B, bzw. B' sind mit Aminen blockierte Phosphorsäurephenylester und Phosphorsäure-bis(2-ethylhexyl)ester, Tetraethylammoniumbenzoat und Tetrabutylammoniumbenzoat.

Die Katalysatoren B, bzw. B' kommen in den erfindungsgemäßen Beschichtungsmitteln in Mengen von 0,005 Gew.-% bis zu 5 Gew.-%, vorzugsweise von 0,005 Gew.-% bis zu 2 Gew.-%, besonders bevorzugt von 0,005 Gew.-% bis zu 1 Gew.-%, berechnet als Summe aller eingesetzten Katalysatoren B, bzw. B' und bezogen auf die Gesamtmenge aus Polyisocyanatkomponente A, Hydroxylgruppen-haltiger Komponente C und Siloxankomponente D zum Einsatz.

### Hydroxylgruppen-haltige Verbindungen C

Als Hydroxylgruppen-haltige Verbindungen C werden beliebige Polyole, die mindestens zwei Hydroxylgruppen tragen, eingesetzt. Geeignete Hydroxylgruppen-haltige Verbindungen C sind beispielsweise die üblichen aus der Polyurethanchemie bekannten Polyhydroxylverbindungen, wie z. B. Polyesterpolyole, Polyetherpolyole, Polycarbonatpolyole und/oder Polyacrylatpolyole, oder beliebige Abmischungen solcher Polyole.

Geeignete Polyesterpolyole C sind beispielsweise solche eines mittleren, aus Funktionalität und Hydroxylzahl berechenbaren Molekulargewichtes von 200 bis 3000, vorzugsweise von 250 bis 2500, mit einem Hydroxylgruppen-Gehalt von 1 bis 21 Gew.-%, vorzugsweise 2 bis 18 Gew.-%, wie sie sich in an sich bekannter Art und Weise durch Umsetzung von mehrwertigen Alkoholen mit unterschüssigen Mengen an mehrwertigen Carbonsäuren, entsprechenden Carbonsäureanhydriden, entsprechenden Polycarbonsäureestern von niederen Alkoholen oder Lactonen herstellen lassen.

Zur Herstellung dieser Polyesterpolyole geeignete mehrwertige Alkohole sind insbesondere solche des Molekulargewichtsbereichs 62 bis 400 wie z. B. 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Die zur Herstellung der Polyesterpolyole C verwendeten Säuren oder Säurederivate können aliphatischer, cycloaliphatischer und/oder heteroaromatischer Natur sein und gegebenenfalls, z. B. durch Halogenatome, substituiert und/oder ungesättigt sein. Beispiele geeigneter Säuren sind beispielsweise mehrwertige Carbonsäuren des Molekulargewichtsbereichs 118 bis 300 oder deren Derivate wie beispielsweise Bernsteinsäure, Adipinsäure, Sebacinsäure, Phthalsäure, Isophthalsäure, Trimellitsäure, Phthalsäureanhydrid, Tetrahydrophthalsäure, Maleinsäure, Maleinsäureanhydrid, dimere und trimere Fettsäuren, Terephthalsäuredimethylester und Terephthalsäure-bis-glykolester.

Zur Herstellung der Polyesterpolyole C können auch beliebige Gemische dieser beispielhaft genannten Ausgangsverbindungen eingesetzt werden.

Geeignete Polyesterpolyole C sind auch solche, wie sie sich in an sich bekannter Weise aus Lactonen und einfachen mehrwertigen Alkoholen, wie z. B. den oben beispielhaft genannten, als Startermolekülen unter Ringöffnung herstellen lassen. Geeignete Lactone zur Herstellung dieser Polyesterpolyole sind beispielsweise β-Propiolacton, □-Butyrolacton, □- und □-Valerolacton, □-Caprolacton, 3,5,5- und 3,3,5-Trimethylcaprolacton oder beliebige Gemische solcher Lactone.

Die Herstellung dieser Lactonpolyester erfolgt im Allgemeinen in Gegenwart von Katalysatoren wie beispielsweise Lewis- oder Brönstedt-Säuren, organischen Zinn- oder Titanverbindungen bei Temperaturen von 20 bis 200°C, vorzugsweise 50 bis 160°C.

Geeignete Polyetherpolyole C sind beispielsweise solche eines mittleren, aus Funktionalität und Hydroxylzahl berechenbaren Molekulargewichtes von 200 bis 6000, vorzugsweise 250 bis 4000, mit einem Hydroxylgruppen-Gehalt von 0,6 bis 34 Gew.-%, vorzugsweise 1 bis 27 Gew.-%, wie sie in an sich bekannter Weise durch Alkoxylierung geeigneter Startermoleküle zugänglich sind. Zur Herstellung dieser Polyetherpolyole können beliebige mehrwertige Alkohole, beispielsweise solche des Molekulargewichtsbereichs 62 bis 400, wie sie oben bei der Herstellung von Polyesterpolyolen beschrieben werden, als Startermoleküle eingesetzt werden.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Geeignete Polyacrylatpoylole C sind beispielsweise solche eines mittleren aus Funktionalität und Hydroxylzahl berechenbaren oder durch Gelpermeationschromatografie (GPC) bestimmbaren Molekulargewichtes von 800 bis 50.000, vorzugsweise von 1000 bis 20.000, mit einem Hydroxylgruppengehalt von 0,1 bis 12 Gew.-%, vorzugsweise 1 bis 10, wie sie sich in an sich bekannter Weise durch Copolymerisation Hydroxylgruppen aufweisender olefinisch ungesättigter Monomerer mit hydroxylgruppenfreien olefinischen Monomeren herstellen lassen.

Beispiele für geeignete Monomere zur Herstellung der Polyacrylatpolyole C sind Vinyl- bzw. Vinylidenmonomere wie z.B. Styrol, □-Methylstyrol, o- bzw. p-Chlorstyrol, o-, m- oder p-Methylstyrol, p-tert.-Butylstyrol, Acrylsäure, Acrylnitril, Methacrylnitril, Acryl- und Methacrylsäureester von Alkoholen mit bis zu 18 Kohlenstoffatomen, wie z. B. Methylacrylat, Ethylacrylat, n-Propylacrylat, Isopropylacrylat, n-Butylacrylat, Isobutylacrylat, tert-Butylacrylat, Amylacrylat, Hexylacrylat, 2-Ethylhexylacrylat, Isooctylacrylat, 3,3,5-Trimethylhexylacrylat, Stearylacrylat, Laurylacrylat, Cyclopentylacrylat, Cyclohexylacrylat, 4-tert.-Butycyclohexylacrylat, Isobornylacrylat, Methylmethacrylat, Ethylmethacrylat, n-Propylmethacrylat, Isopropylmethacrylat, Butylmethacrylat, Isobutylmethacrylat, tert-Butylmethacrylat, Amylmethacrylat, Hexylmethacrylat, 2-Ethylhexylmethacrylat, Isooctylmethacrylat, 3,3,5-Trimethylhexylmethacrylat, Stearylmethacrylat, Laurylmethacrylat, Cyclopentylmethacrylat, Cyclohexylmethacrylat, 4-tert.-Butycyclohexylmethacrylat, Norbornylmethacrylat oder Isobornylmethacrylat, Diester der Fumarsäure, Itaconsäure oder Maleinsäure mit 4 bis 8 Kohlenstoffatome aufweisenden Alkoholen, Acrylsäureamid, Methacrylsäureamid, Vinylester von Alkanmonocarbonsäuren mit 2 bis 5 Kohlenstoffatomen, wie z. B. Vinylacetat oder Vinylpropionat, Hydroxyalkylester der Acrylsäure oder Methacrylsäure mit 2 bis 5 Kohlenstoffatomen im Hydroxyalkylrest, wie z. B. 2-Hydroxyethyl-, 2-Hydroxypropyl-, 3-Hydroxypropyl-, 3-Hydroxybutyl-, 4-Hydroxybutyl-, Trimethylolpropanmono- oder Pentaerythritmonoacrylat oder -methacrylat, sowie beliebige Gemische solcher beispielhaft genannter Monomere.

Bevorzugte Hydroxylgruppen-haltige Verbindungen C sind Polyesterpolyole, Polycarbonatpolyole und/oder Polyacrylatpolyole der genannten Art. Besonders bevorzugte Hydroxylgruppen-haltige Verbindungen C sind Polyacrylatpolyole der genannten Art, die gegebenenfalls im Gemisch mit Polyesterpolyolen und/oder Polycarbonatpolyolen der genannten Art eingesetzt werden können. Ganz besonders bevorzugt enthält die Komponenten C ausschließlich Polyacrylatpolyole der genannten Art.

### Alkoxysilyl-funktionelle Siloxane D

Die erfindungsgemäßen Beschichtungsmittel enthalten mindestens ein alkoxysilyl-funktionelles Siloxan D.

Siloxane sind dem Fachmann bekannt. Es handelt sich um von reinen Silanen (das heißt binären aus Si und H bestehenden Verbindungen) abgeleitete Komponenten der allgemeinen Formel R₃Si-[0-SiR₂]ₙ-0-SiR₃, wobei R Wasserstoffatome oder Alkylgruppen sein können. In Siloxanen sind die Siliziumatome also über genau ein Sauerstoffatom mit ihrem benachbarten Siliziumatom verknüpft, sie enthalten zumindest eine Si-O-Si Bindung. Ist mindestens eines der Wasserstoffatome durch einen organischen Rest wie beispielsweise eine Alkylgruppe ersetzt, werden diese auch als Organosiloxane bezeichnet. Oligomere oder polymere Organosiloxane (Siloxane mit R ≠H) besitzen lange Si-O- Hauptketten und werden wiederum als Silicone bezeichnet.

Enthält der zuvor beschriebene organische Rest des Organosiloxans zudem mindestens eine Alkoxysilylgruppe, ist in dem organischen Rest also mindestens ein Wasserstoffrest durch eine Alkoxysilylgruppe substituiert, wodurch also zumindest anteilig ein Wasserstoff des vom reinen Siloxan abgeleiteten Derivats durch einen organischen Rest substituiert ist, der selber wiederum eine alkoxysilylfunktionelle Gruppe enthält, wird dies im Rahmen der vorliegenden Erfindung als alkoxysilylfunktionelles Siloxan (Komponente D) bezeichnet.

Bei einem alkoxysilylfunktionellen Rest handelt es sich um eine funktionelle Gruppe, die sich von einem Alkoxysilan ableitet, eine von einem reinen Silan abgeleitete Komponente enthaltend eine Gruppe Si-OR. Es ist also mindestens ein Wasserstoffatom eines reinen Silans durch eine Alkoxygruppe -OR, also eine über Sauerstoff mit dem Silizium verbundene Alkylgruppe, substituiert. Beispielsweise seien Mono-, Di-, oder Tri-methoxy- oder -ethoxy-silan genannt. Demzufolge handelt es sich bei den erfindungsgemäß einzusetzenden alkoxysilylfunktionellen Siloxanen D um Derivate des Siloxans, in denen mindestens ein Wasserstoffatom durch einen organischen Rest substituiert wurde, in dem wiederum mindestens ein Wasserstoffrest durch eine Alkoxysilylgruppe ersetzt wurde. Die Alkoxysilylgruppe ist demzufolge immer als funktionelle Gruppe einer Alkylgruppe zu verstehen, die selber an dem Siloxangerüst angebunden ist. Die Alkoxysilylgruppe ist also immer über einen zweibindigen organischen Rest R, beispielsweise ein Alkylen, mit dem Si-O-Si Gerüst verbunden und bindet niemals direkt an das Siloxan Grundgerüst aus Si-O-Si Einheiten an.

Die erfindungsgemäß zu verwendenden alkoxysilylfunktionelle Siloxane D entsprechen der allgemeinen Formel (III):

R¹⁰-SiR¹¹₂-Aₓ-B_{y}-O-SiR¹²₂-R¹³ (III),

worin A eine Gruppe -[O-SiR¹⁴₂]- und B eine Gruppe -[O-SiR¹⁵R¹⁶]- ist,
R¹¹, R¹², R¹⁴ und R¹⁵ unabhängig voneinander lineare oder verzweigte Alkylgruppen mit 1 bis 4 Kohlenstoffatomen sind,
R¹⁰, R¹³ und R¹⁶ unabhängig voneinander eine Gruppe -L-R¹⁷ sind, worin L = eine lineare oder verzweigte 2-bindige Alkylgruppe und
R¹⁷ = H oder -Si(R¹⁸)_{z}(OR¹⁹)_{3-z}mit R¹⁸, R¹⁹ = eine lineare oder verzweigte Alkylgruppe mit 1 bis 4 Kohlenstoffatomen und z = 0, 1, oder 2, bevorzugt z = 0, ist,
mit der Vorgabe, das mindestens einer der Reste R¹⁰ oder R¹³ und/oder mindestens eine Gruppe B eine Gruppe R¹⁷ = -Si(R¹⁸)_{z}(OR¹⁹)_{3-z} beinhaltet,
x unabhängig für eine ganze Zahl von 1 -20 steht, und
y unabhängig für eine ganze Zahl von 0-10 steht,
wobei bevorzugt x+y ≤ 20 ist.

Das Siloxan D enthält also jedenfalls mindestens eine Gruppe -Si(R¹⁸)_{z}(OR¹⁹)_{3-z}.

Ist y > 0, sind neben Bausteinen A auch Bausteine B in der Polysiloxankette enthalten. Ist dagegen y = 0, sind lediglich Bausteine A vorhanden. Bevorzugt sind lediglich Bausteine A vorhanden (y = 0). Nochmals bevorzugt ist y = 0 und x eine Zahl von 6 bis 14.

Die alkoxysilylfunktionellen Siloxane D können eine lineare oder verzweigte Form haben, je nachdem, welche Reste R¹⁰, R¹³ und/oder R¹⁶ eine Alkoxysilylgruppe enthalten. Sind Alkoxysilylgruppen in der Form des Rests R¹⁷ = -Si(R¹⁸)_{z}(OR¹⁹)_{3-z} mit R¹⁸, R¹⁹ = eine lineare oder verzweigte Alkylgruppe mit 1 - 4 Kohlenstoffatomen und z = 0, 1, oder 2, bevorzugt z = 0, nur terminal in den Resten R¹⁰ und R¹³ angeordnet, ist das alkoxysilylfunktionelle Siloxan linear. Sind hingegen auch Alkoxysilylgruppen in den Rest R¹⁶ enthalten, ist das Siloxan verzweigt. Bevorzugt ist das Siloxan linear.

Die Reste R¹⁰, R¹³ und R¹⁶ sind gleiche oder verschiedene Reste, wobei immer mindestens einer der Reste eine Gruppe -L-R¹⁷ darstellt, in der R¹⁷ eine Alkoxysilylgruppe entspricht. Ganz besonders bevorzugt weist mindestens eine dieser Reste R¹⁰, R¹³ und R¹⁶ eine Gruppe -L-R¹⁷ auf, in der L eine Ethylengruppe und R¹⁷ eine Trialkoxysilangruppe ist. Ganz besonders bevorzugt ist L eine Ethylengruppe und R¹⁷ eine Trimethoxy- oder Triethoxysilangruppe. Nochmals ganz besonders bevorzugt ist y = 0 und es stellen beide terminalen Gruppen R¹⁰ und R¹³ eine Gruppe -L-R¹⁷ dar, in der L eine Ethylengruppe und R¹⁷ eine Trimethoxy- oder Triethoxysilangruppe ist. In einer weiteren ganz besonders bevorzugten Ausführungsform ist y > 0, entspricht R¹⁶ einer Gruppe -L-R¹⁷, in der L eine Ethylengruppe und R¹⁷ eine Trialkoxysilangruppe ist und R¹⁰ und R¹³ eine Gruppe -L-R¹⁷ sind, in der R¹⁷ einem Wasserstoffatom entspricht.

Besonders bevorzugt sind die Reste R¹¹, R¹², R¹⁴, R¹⁵, R¹⁸ und R¹⁹ gleiche oder verschiedene Alkylreste, ganz besonders bevorzugt sind diese Reste R¹¹, R¹², R¹⁴, R¹⁵, R¹⁸ und R¹⁹ lineare Alkylgruppen mit ein bis vier Kohlenstoffatomen, und nochmals ganz besonders bevorzugt sind die Reste R¹¹, R¹², R¹⁴, R¹⁵, R¹⁸ und R¹⁹ Methyl- und/oder Ethylreste, insbesondere Methylreste.

Komponente D enthält mindestens ein alkoxysilylfunktionelles Siloxan. Demnach können alkoxysilylfunktionelle Siloxane mit der Alkoxysilylfunktion in der Seitenkette neben solchen vorliegen, in der die Alkoxysilylfunktion(en) terminal an der Siloxankette vorliegen.

Besonders bevorzugte alkoxysilylfunktionellen Siloxane D sind im Handel über die Firma Shin Etsu erhältlich.

Bevorzugt enthalten die erfindungsgemäßen Beschichtungsmittel von 0,001 bis 5 Gew.-%, bevorzugt von 0,005 bis 3 Gew.-% und besonders bevorzugt von 0,01 bis 2 Gew.-%, an Komponente E, wobei die Gew.-%-Angaben jeweils bezogen sind auf die Gesamtmenge aus Polyisocyanatkomponente A, isocyanatreaktiver Komponente C und Siloxankomponente D.

### Weitere Komponenten

### Hilfs- und Zusatzstoffe

Die erfindungsgemäßen Beschichtungsmittel können gegebenenfalls weitere Hilfs- und Zusatzstoffe enthalten. Diese können in der ersten oder der zweiten Beschichtungsmittelkomponente oder in beiden Beschichtungsmittelkomponenten enthalten sein. Im letztgenannten Fall können in beiden Komponenten gleiche oder unterschiedliche Hilfs- und Zusatzstoffe enthalten sein.

Sofern Hilfs- und Zusatzstoffe in der zweiten Beschichtungsmittelkomponente vorhanden sind, so können diese in der Mischung aus C und D zu Beginn von deren Lagerung bereits enthalten sein, oder der Mischung aus C und D während deren Lagerung beigemischt werden. Auch ist es möglich, dass ein Teil der Hilfs- und Zusatzstoffe in der Mischung aus C und D zu Beginn von deren Lagerung bereits enthalten ist und ein weiterer Teil während der Lagerung der Mischung beigemischt wird.

Bei den Hilfs- und Zusatzstoffen handelt es sich insbesondere um die dem Fachmann aus der Lacktechnologie bekannten Hilfs- und Zusatzstoffe, wie z. B. Lösungsmittel, UV-Stabilisatoren, Antioxidantien, Wasserfänger, Verlaufsmittel, Rheologieadditive, Slipadditive, Entschäumer, Füllstoffe und/oder Pigmente sowie anorganische Nanopartikel, insbesondere die Oxide des Siliciums, Aluminiums, Cers und/oder Titans, die ggf. auch in Form entsprechender Sole wie vorteilhaft Organosole des Siliciumdioxids eingesetzt werden können.

Zur Verringerung der Verarbeitungsviskosität können die erfindungsgemäßen Beschichtungsmittel beispielsweise mit üblichen organischen Lösungsmitteln verdünnt werden. Hierfür geeignete Lösungsmittel sind beispielsweise die bereits vorstehend bei der Herstellung der Silangruppen enthaltenden Polyisocyanate A als gegebenenfalls mitzuverwendende Lösungsmittel beschriebenen Lacklösungsmittel, die sich gegenüber den reaktiven Gruppen der Beschichtungsmittelbestandteile chemisch inert verhalten und einen Wassergehalt von höchstens 1,0 Gew.-%, besonders bevorzugt höchstens 0,5 Gew.-% bezogen auf eingesetztes Lösungsmittel aufweisen.

Geeignete UV-Stabilisatoren können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5 -Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,l-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)phenol, Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxybenzylidenmalonsäuredimethylester, 4-Methoxybenzylidenmalonsäurediethylester, 4-Butoxybenzylidenmalonsäuredimethylester. Diese bevorzugten UV-Stabilisatoren können sowohl einzeln als auch in beliebigen Kombinationen untereinander zum Einsatz kommen.

Gegebenenfalls werden ein oder mehrere der beispielhaft genannten UV-Stabilisatoren dem erfindungsgemäßen Beschichtungsmittel vorzugsweise in Mengen von 0,001 bis 3,0 Gew.-%, besonders bevorzugt 0,01 bis 2 Gew.-%, berechnet als Gesamtmenge an eingesetzten UV-Stabilisatoren bezogen auf die Gesamtmenge aus Polyisocyanatkomponente A, isocyanatreaktiver Komponente C, Komponente B und B' und Siloxankomponente D zugesetzt.

Geeignete Antioxidantien sind vorzugsweise sterisch gehinderten Phenole, welche vorzugsweise ausgewählt werden können aus der Gruppe, bestehend aus 2,6-Di-tert-butyl-4-methylphenol (Ionol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden.

Diese Antioxidantien werden vorzugsweise in Mengen von 0,01 bis 3,0 Gew.-%, besonders bevorzugt 0,02 bis 2,0 Gew.-%, berechnet als Gesamtmenge an eingesetzten Antioxidantien bezogen auf die Gesamtmenge aus Polyisocyanatkomponente A, isocyanatreaktiver Komponente C und Siloxankomponente D eingesetzt.

Um eine vorzeitige Vernetzung der Silangruppen in den erfindungsgemäßen Beschichtungsmitteln zu unterbinden, kann der Zusatz von Wasserfängern, beispielsweise Orthoameisenestern, wie z. B. Triethylorthoformiat, oder Vinylsilanen, wie z. B. Vinyltrimethoxysilan, vorteilhaft sein. Diese Wasserfänger kommen, falls überhaupt, in Mengen von 0,01 Gew.-% bis zu 5 Gew.-%, vorzugsweise von 0,01 Gew.-% bis zu 2 Gew.-%, bezogen auf die auf die Gesamtmenge aus Polyisocyanatkomponente A, isocyanatreaktiver Komponente C und Siloxankomponente D zum Einsatz.

Zur Verbesserung der Substratbenetzung können die erfindungsgemäßen Beschichtungsmittel gegebenenfalls geeignete Verlaufsmittel, beispielsweise organisch modifizierte Siloxane, wie z. B.

Polyethermodifizierte Siloxane, Polyacrylate und/oder Fluortenside, enthalten. Diese Verlaufsmittel kommen, falls überhaupt, in Mengen von 0,01 Gew.-% bis zu 3 Gew.-%, vorzugsweise von 0,01 Gew.-% bis zu 2 Gew.-%, besonders bevorzugt von 0,05 bis 1,5 Gew.-%, bezogen auf die auf die Gesamtmenge aus Polyisocyanatkomponente A, isocyanatreaktiver Komponente C und Siloxankomponente D zum Einsatz.

Die in den erfindungsgemäßen Beschichtungsmitteln ebenfalls als weitere Hilfs- und Zusatzstoffe gegebenenfalls enthaltenen Rheologieadditive, Slipadditive, Entschäumer, Füllstoffe, Mattierungsmittel und/oder Pigmente sind dem Fachmann bekannt und kommen falls überhaupt in der Lacktechnologie üblichen Mengen zum Einsatz. Eine ausführliche Übersicht über derartige geeignete Hilfs- und Zusatzstoffe findet sich beispielsweise in Bodo Müller, "Additive kompakt", Vincentz Network GmbH & Co KG (2009).

Als weitere Hilfs- und Zusatzstoffe können den erfindungsgemäßen Beschichtungsmitteln zur Steuerung der Aushärtegeschwindigkeit geeignete Katalysatoren zugegeben werden, beispielsweise die in der Isocyanatchemie üblichen Urethanisierungs- und Allophanatisierungskatalysatoren, wie beispielsweise tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,2-Dimethylimidazol, 2-Methylimidazol, N,N-Dimethylimidazol-β-phenylethylamin, 1,4-Diazabicyclo-(2,2,2)-octan (DABCO) und Bis-(N,N-dimethylaminoethyl)adipat, Amidine, wie z. B. 1,5-Diazabicyclo[4.3.0]nonen (DBN), 1,8-Diazabicyclo(5.4.0)undecen-7 (DBU) und 2,3-Dimethyl-3,4,5,6-tetrahydropyrimidin, Alkanolaminverbindungen, wie z. B. Triethanolamin, Triisopropanolamin, N-Methyl-diethanolamin, N-Ethyl-diethanolamin, Dimethylaminoethanol und 2-(N,N-Dimethylaminoethoxy)ethanol, N,N',N"-Tris-(dialkylaminoalkyl)hexahydrotriazine, wie z. B. N,N',N"-Tris-(dimethylaminopropyl)-s-hexahydrotriazin, Bis(dimethylaminoethyl)ether sowie Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)- Wismut(III)-2-ethylhexanoat, Wis-mut(III)-octoat, Wismut(III)-neodecanoat, Zinkchlorid, Zink-2-ethylcaproat, Zink-(II)-stearat, Zink-(II)-n-octanoat, Zink-(II)-2-ethyl-1-hexanoat, Zink-(II)-naphthenat oder Zink-(II)-acetylacetonat, Zinn(II)-octoat, Zinn(II)-ethylcaproat, Zinn(II)-palmitat, Zinn-(II)-laurat, Dibutylzinn(IV)-dilaurat (DBTL), Dibutylzinn(IV)-dichlorid, Zinn-(II)-2-ethyl-1-hexanoat, Dibutylzinnoxid, Dibutylzinndiacetat, Dibutylzinndimaleat oder Dioctylzinndiacetat, Bleioctoat, Zirconiumverbindungen, wie z. B. Zirconium-(IV)-2-ethyl-1-hexanoat, Zirconium-(IV)-neodecanoat, Zirconium-(IV)-naphthenat oder Zirconium-(IV)-acetylacetonat, Aluminium-tri(ethylacetoacetat), Kaliumoctoat, Mangan- Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

### Weitere hydrolysierbare Silanverbindungen

Als weitere Komponenten können den erfindungsgemäßen Beschichtungsmitteln auch beliebige weitere hydrolysierbare Silanverbindungen, wie z. B. Tetramethoxysilan, Tetraethoxysilan, Methyltrimethoxysilan, Methyltriethoxysilan, Ethyltriethoxysilan, Isobutyltrimethoxysilan, Isobutyltriethoxysilan, Octyltriethoxysilan, Octyltrimethoxysilan, (3 -Glycidyloxypropyl)methyldiethoxysilan, (3 -Glycidyloxypropyl)trimethoxy-silan, Phenyltrimethoxysilan oder Phenyltriethoxysilan, oder Gemische solcher Silanverbindungen als Reaktionspartner zugesetzt werden.

Diese Verbindungen werden bevorzugt der Komponenten (I) zugegeben. Werden sie der Komponente (II) zugegeben, ist durch einfache Vorversuche an der konkreten Zusammenstellung sicherzustellen, dass die Stabilität der Komponente (II) über die gewünschte Lagerzeit erhalten bleibt. Trübungen oder Anstieg von Viskosität sind beispielsweise Zeichen für mangelnde Stabilität.

Werden diese hydrolysierbaren Silanverbindungen der Beschichtungsmittelkomponente II zugemischt, können sie in der Mischung aus C und D zu Beginn von deren Lagerung bereits enthalten sein, oder der Mischung aus C und D während deren Lagerung beigemischt werden. Auch ist es möglich, dass ein Teil dieser hydrolysierbaren Silanverbindungen in der Mischung aus C und D zu Beginn von deren Lagerung bereits enthalten ist und ein weiterer Teil während der Lagerung der Mischung beigemischt wird.

### Weitere Polyisocyanate

Neben den Polyisocyanaten A können die Beschichtungsmittelkomponente I auch weitere Poyisocyanate enthalten. Dies können beispielsweise monomere oder modifizierte Polyisocyanate sein, wie sie oben unter Komponente A1 beschrieben wurden.

In den erfindungsgemäßen Beschichtungsmitteln liegen die Reaktionspartner üblicherweise in solchen Mengen vor, dass auf jede Isocyanatgruppe 0,5 bis 3, vorzugsweise 0,6 bis 2,0, besonders bevorzugt 0,8 bis 1,6 gegenüber Isocyanaten reaktive Gruppen entfallen. Ganz besonders bevorzugt wird ein Verhältnis von NCO-Gruppen zu Isocyanat-reaktiven Gruppen von mindestens 1,0 eingestellt. In einer am meisten bevorzugten Variante wird mit einem Überschuss von NCO-Gruppen gearbeitet entsprechend einem Verhältnis von NCO-Gruppen zu Isocyanat-reaktiven Gruppen von 1,05 bis 1,50.

Gegenstand der vorliegenden Erfindung ist ein Verfahren zur Herstellung eines Beschichtungsmittels aus
einer ersten Komponente (I), enthaltend oder bestehend aus
(A) mindestens eine/r Polyisocyanatkomponente gemäß vorstehender Beschreibung
(B) gegebenenfalls einen/einem oder mehrere/n Katalysatoren für die Vernetzung von Silangruppen,
und einer zweiten Komponente (II), enthaltend oder bestehend aus
(C) mindestens eine/r Hydroxylgruppen-haltige/n Verbindung,
(D) mindestens ein/em Alkoxysilyl-funktionelles/en Siloxan (III) gemäß vorstehender Beschreibung
   und
(B') gegebenenfalls einen/einem oder mehrere/n Katalysatoren für die Vernetzung von Silangruppen,
wobei in wenigstens einer der beiden Komponenten I und II mindestens ein Katalysator für die Vernetzung von Silangruppen (B bzw. B') enthalten ist,
dadurch gekennzeichnet, dass
die Komponenten C und D vollständig gemischt werden und die Mischung nach einer Dauer von mindestens (≥) 5 Stunden, als Lagerung bezeichnet, mit Komponente A, gegebenenfalls in Abmischung mit Komponente B, gemischt wird,
wobei B', sofern in Komponente II vorhanden, in der Mischung aus C und D zu Beginn der Lagerung bereits enthalten ist, oder der Mischung aus C und D während deren Lagerung beigemischt wird, oder ein Teil von B' in der Mischung aus C und D zu Beginn von deren Lagerung bereits enthalten ist und ein weiterer Teil während der Lagerung der Mischung beigemischt wird.

Ein weiterer Gegenstand der vorliegenden Erfindung ist ein Beschichtungsmittel, erhältlich nach dem zuvor beschriebenen Verfahren.

### Lagerung

Wie zuvor beschrieben wird Komponente II durch eine wenigstens (≥) 5-stündigen Lagerung, bevorzugt wenigstens 24-stündigen, besonders bevorzugt einer wenigstens 48-stündigen Lagerung einer Mischung aus den Komponenten C und D erhalten.

Zur Erzeugung der Mischung werden die Komponenten C und D einander zugegeben. Der Beginn der Lagerung wird als der Zeitpunkt definiert, an dem die beiden Komponenten vollständig einander zugegeben sind. Während die beiden Stoffe einander zugegeben werden und noch eine Zeit lang nach der vollständigen Zugabe wird das Gemisch für gewöhnlich gerührt, um eine optimale Vermengung der Stoffe zu erreichen.

Die Lagerung endet zu dem Zeitpunkt, an dem eine erste Menge einer der beiden Beschichtungsmittelkomponenten I oder II mit der jeweils anderen Komponente in Kontakt gebracht wird.

Wie zuvor beschrieben können in Komponente II weitere Komponenten enthalten sein, wie z.B. der Katalysator für die Vernetzung von Silangruppen (B'), Hilfs- und Zusatzstoffe, u.s.w.

Wie ebenfalls zuvor beschreiben, können diese Verbindungen bereits zu Beginn der Lagerung in der Mischung aus C und D enthalten sein, oder der Mischung aus C und D während deren Lagerung beigemischt werden. Ebenso ist es möglich, dass ein Teil dieser Verbindungen bereits zu Beginn der Lagerung in der Mischung aus C und D enthalten ist und ein weiterer Teil während der Lagerung der Mischung beigemischt wird.

In den Fällen, in denen diese Verbindungen, vollständig oder teilweise, während der Lagerung zugegeben werden, kann nochmal gerührt werden, um eine optimale Vermengung aller Komponenten zu erreichen. Der Zeitpunkt zu dem die Lagerung beginnt, verschiebt sich durch die Zugabe dieser Verbindungen nicht.

Die Lagerung erfolgt bevorzugt bei üblichen Lagerbedingungen für Lacke von 5 bis 40 °C. Besonders bevorzugt ist die Lagerung bei 15 bis 25 °C, insbesondere bei Raumtemperatur (23°C).

Die Lagerung beträgt mindestens (≥) 5 Stunden, bevorzugt mindestens 24 Stunden, besonders bevorzugt mindestens (≥) 48 Stunden, ganz besonders bevorzugt mindestens 72 Stunden.

Bevorzugt beträgt die Lagerung bei 23 °C mindestens (≥) 5 Stunden, bevorzugt mindestens 24 Stunden, besonders bevorzugt mindestens (≥) 48 Stunden ganz besonders bevorzugt mindestens 72 Stunden.

### Verwendung der erfindungsgemäßen Beschichtungsmittel

Als Untergründe für die mit den erfindungsgemäßen Beschichtungsmitteln zu beschichtenden Substrate eignen sich beliebige Substrate, wie z.B. Metall, Holz, Glas, Stein, keramische Materialien, Beton, harte und flexible Kunststoffe, Textilien, Leder und Papier, sowie Verbundmaterialien, die vor der Beschichtung auch bevorzugt mit einer oder mehreren Schichten wie üblichen Grundierungen und/oder Basislackschichten versehen werden. In einer bevorzugten Ausführungsform werden die erfindungsgemäßen Beschichtungsmittel zur Beschichtung von harten und flexiblen Kunststoffen verwendet, im Besonderen für Kunststoffe im Bereich der Automobilindustrie. Die erfindungsgemäßen Beschichtungsmittel werden bevorzugt als Klarlack oder Decklack eingesetzt. Besonders bevorzugt sind solche Substrate, für die Anforderungen wie geringes Anschmutzverhalten und/oder einfache Reinigung im Falle von Anschmutzung bestehen.

Geeignete Methoden zum Aufbringen der erfindungsgemäßen Beschichtungsmittel auf das Substrat sind beispielsweise Drucken, Streichen, Rollen, Gießen, Tauchen, Fluten und/oder bevorzugt Spritzen wie beispielsweise Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Geeignete Schichtdicken richten sich nach dem Applikationsverfahren und betragen als Trockenschichtdicke betrachtet üblicherweise zwischen 5 und 60 µm, bevorzugt zwischen 10 und 40 µm, insbesondere zwischen 12 und 30 µm.

Im Anschluss an das Aufbringen der erfindungsgemäßen Beschichtungsmittel werden zunächst flüchtige Substanzen wie organische Lösemittel mit in der Lackiertechnik üblichen Methoden entfernt. Bevorzugt erfolgt das Entfernen durch Trocknen bei erhöhten Temperaturen, z.B. in einem Bereich von 40 bis 250 °C, bevorzugt von 40 bis 100 °C in Öfen und mit bewegter Luft (Konvektionsöfen, Düsentrockner) sowie Wärmestrahlung (IR, NIR). Weiterhin können Mikrowellen zum Einsatz kommen. Es ist möglich, mehrere dieser Trocknungsverfahren zu kombinieren.

Vorteilhafterweise werden die Bedingungen für die Trocknung so gewählt, dass die maximal erreichte Temperatur unter der Grenze bleibt, bei der sich das Substrat verformt oder sonstige Schäden erleidet.

Gegenstand der Erfindung sind daher auch die Verwendung der erfindungsgemäßen Beschichtungsmittel zur Beschichtung von Substraten, sowie die beschichteten Substrate selbst.

### Beispiele

Alle Prozentangaben beziehen sich, soweit nichts Anderslautendes vermerkt, auf das Gewicht.

Zur Herstellung der lösemittelhaltigen Klarlacke wurden die Polyole Desmophen 670 BA (Covestro Deutschland AG, Leverkusen, DE) und Setalux D A 365 BA/X (Allnex Germany GmbH, Bitterfeld-Wolfen, DE) mit einem handelsüblichen Verlaufsadditiv (Baysilone Lackadditive OL 17, OMG AG + Co. KG, Langenfeld, DE) sowie dem handelsüblichen Katalysator Nacure 4000 (King Industries, Norwalk, US, als Katalysator C) sowie zur Einstellung der Viskosität die Lösungsmittel Methoxypropylacetat, Solvent Naphta 100 und Diacetonalkohol durch intensives Rühren bei Raumtemperatur homogen vermischt.

Im Falle des erfindungsgemäßen Beispiels 1 wurde das Additiv KR-410 (lineares alkoxysilylfunktionelles Polysiloxan, Shin-Etsu, Japan) der Stammlackmischung zugegeben, es wurde homogen vermischt und die Mischung wurde für 72 Stunden bei Raumtemperatur gelagert. Nach 72 Stunden wurde für die Vernetzung das Polyisocyanat zu dieser Mischung hinzugegeben.

Im Falle des erfindungsgemäßen Beispiels 2 wurde das Additiv KR-410 (lineares alkoxysilylfunktionelles Polysiloxan, Shin-Etsu, Japan) der Stammlackmischung zugegeben, es wurde homogen vermischt und die Mischung wurde für 5 Stunden bei Raumtemperatur gelagert. Nach 5 Stunden wurde für die Vernetzung das Polyisocyanat zu dieser Mischung hinzugegeben.

Im Falle des Vergleichsbeispiels 3 wurde das Additiv KR- 410 (Shin-Etsu, Japan) erst kurz vor der Vernetzung in die Stammlackkomponente eingerührt, welche dementsprechend ohne Additiv für 72 Stunden bei Raumtemperatur gelagert wurde. Nachdem eine homogene Mischung entstanden war wurde direkt das Polyisocyanat hinzugegeben.

Tabelle 1 zeigt die Zusammensetzungen der einzelnen Formulierungen.

Zur Herstellung eines Klarlacks wurden die oben beschriebenen Mischungen jeweils mit einer Spritzpistole (Düse: SATA / 1,2 mm) auf eine mit Isopropylalkohol gereinigte Glasplatte aufgetragen. Nach Filmaufzug wurde für 10 Minuten bei Raumtemperatur, anschließend für 30 Minuten bei 80°C und für 16 Stunden bei 60°C getrocknet.

Die Bestimmung der Pendeldämpfung nach König erfolgte nach DIN EN ISO 1522:2007.

Zur Bestimmung der Easy-to-Clean Eigenschaften mittels sogenanntem Markertest wurde mit einem handelsüblichen grünen Edding 3000 permanent Marker (Firma Edding, Ahrensburg, Deutschland) ein breiter Strich auf die Beschichtung aufgetragen, welcher nach 10 s mit einem staubfreien Tuch soweit wie möglich abgewischt wurde. Die Intensität des Rückstands wurde visuell beurteilt (++ = kein erkennbarer Rückstand, + = leichter Rückstand, - = kompletter Strich noch vorhanden). Außerdem wurde das Auftragsverhalten bewertet (O = gut auftragbar, O/Z = Markierung zieht sich leicht zusammen, Z = Markierung zieht deutlich sich zusammen).

Die Messungen der Kontaktwinkel mit Wasser wurden an einem Gerät OCA20 der Firma Data Physics durchgeführt. Dazu wurden 10 Tropfen mit je ca 2 µL destilliertem Wasser auf die Beschichtungsoberfläche aufgesetzt und der entstanden Kontaktwinkel nach ca 3 s erfasst. Aus den 10 Messwerten wurde der Mittelwert berechnet. Zur Tropfenanalyse und Auswertung wurde die SCA-Software der Firma Data Physics verwendet.

Tabelle 2 zeigt die Ergebnisse der anwendungstechnischen Prüfungen im Vergleich.

### Verwendete Ausgangsverbindungen

### Desmophen 670 BA

Schwach verzweigter, hydroxlgruppenhaltiger Polyester, ca. 80% in Butylacetat, ca. 3,5% Hydroxylgehalt, Viskosität bei 23°C ca 3000 mPas.

### Desmodur 2873

Silan-funktionelles aliphatisches Polyisocyanat auf Basis von HDI (Covestro Deutschland AG, Leverkusen, 100% Lieferform, NCO-Gehalt: 12,3%, Viskosität bei 23°C: ca 450 mPas.

### Setalux D A 365 BA/X

Polyacrylatpolyol (Allnex Germany GmbH, Bitterfeld-Wolfen, DE), 65 %ige Lösung in Butylacetat / Xylol (75 : 25), ca 2,7 % Hydroxylgehalt (bezogen auf Lieferform), Viskosität bei 23°C: ca. 3000 mPas.

### Nacure 4000

Alkylsäurephosphatkatalysator (King Industries, Norwalk, US), Säurezahl ca 650 mg KOH/g, Verwendung als 10%ige Lösung der Lieferform in MPA.

### KR-410

lineares alkoxysilylfunktionelles Siloxan (Shin-Etsu, Japan), Lieferform.

**Tabelle 1: Klarlackformulierungen. Alle Angaben in g wenn nicht anders angegeben.**

| **Beispiel** | **1** | **2** | **3** (Vgl) |
|---|---|---|---|
| **Komponente II** | | | |
| DESMOPHEN 670 BA | 18,80 | 18,80 | 18,80 |
| Setalux D A 365 BA/X | 130,80 | 130,80 | 130,80 |
| Baysilone Lackadditive OL 17 | 1,80 | 1,80 | 1,80 |
| Methoxypropoylacetat | 36,10 | 36,10 | 36,10 |
| Solventnaphtha 100 | 36,10 | 36,10 | 36,10 |
| Diacetonalkohol | 18,10 | 18,10 | 18,10 |
| Nacure 4000 | 1,90 | 1,90 | 1,90 |
| KR-410 | 1,70 | 1,70 | 1,70 |
| | | | |
| **Lagerung** | 72 h | 5 h | -- |
| | | | |

| **Komponente I** | | | |
|---|---|---|---|
| Desmodur 2873 | 93,20 | 93,20 | 93,20 |

**Tabelle 2: Übersicht über die Prüfergebnisse.**

| **Beispiel** | **1** | **2** | **3** (Vgl) |
|---|---|---|---|
| | | | |
| Pendeldämpfung nach König [s] Nach 24 h | 183 | 173 | 172 |
| Pendeldämpfung nach König [s] Nach 1 Woche | 194 | 185 | 188 |
| Markertest - Rückstand | ++ | + | + |
| Markertest - Auftragsverhalten | Z | Z | O/Z |

Wie Tabelle 2 zu entnehmen ist, bringt die Lagerung des Additivs KR-410 in der OH-funktionalen Komponente II deutliche Vorteile in den Reinigungseigenschaften. Bereits bei einer Lagerung von 5 Stunden (Beispiel 2) zieht sich die Markierung deutlicher zusammen als im Vergleichsbeispiel 3. Bei einer Lagerung von 72 Stunden (Beispiel 1) ist nach dem Markertest kein Rückstand zu sehen.

## Patentansprüche

1. Zwei-komponentige Beschichtungsmittel aus
einer ersten Komponente (I), enthaltend oder bestehend aus
(A) mindestens eine/r Polyisocyanatkomponente, erhältlich durch Umsetzung
(A1) mindestens eines Polyisocyanats mit
(A2) mindestens einer gegenüber Isocyanatgruppen reaktiven Verbindung der allgemeinen Formel (I) 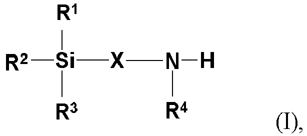 in welcher
R¹, R² und R³ für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
X für einen linearen oder verzweigten organischen Rest mit mindestens 2 Kohlenstoffatomen steht, der gegebenenfalls bis zu 2 Iminogruppen (-NH-) enthalten kann,
R⁴ für Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen steht oder für
i) einen Rest der Formel 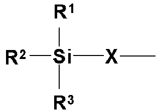 steht, in welchem R¹, R², R³ und X die vorstehend angegebene Bedeutung haben, oder
ii) einen Rest der Formel 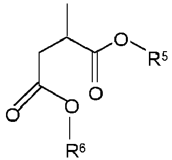 steht, in welchem R⁵ und R⁶ unabhängig voneinander gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen können,
iii) einen Rest der Formel 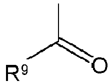 steht, in welcher R⁹ für Wasserstoff oder einen gesättigten linearen oder verzweigten, aliphatischen oder cycloaliphatischen organischen Rest mit 1 bis 8 Kohlenstoffatomen steht,
oder der allgemeinen Formel (II) 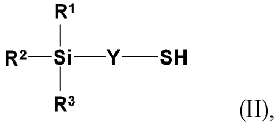
in welcher R¹, R² und R³ die für Formel (I) genannte Bedeutung haben und
Y für einen linearen oder verzweigten organischen Rest mit mindestens 2 Kohlenstoffatomen steht,
(B) gegebenenfalls einen/einem oder mehrere/n Katalysatoren für die Vernetzung von Silangruppen,
und einer zweiten Komponente (II), enthaltend oder bestehend aus
(C) mindestens eine/r Hydroxylgruppen-haltige/n Verbindung,
(D) mindestens ein/em Alkoxysilyl-funktionelles/en Siloxan der Formel (III)
R¹⁰-SiR¹¹₂-Aₓ-B_{y}-O-SiR¹²₂-R¹³ (III),
worin A eine Gruppe -[O-SiR¹⁴₂]- und B eine Gruppe -[O-SiR¹⁵R¹⁶]- ist,
R¹¹, R¹², R¹⁴ und R¹⁵ unabhängig voneinander lineare oder verzweigte Alkylgruppen mit 1 bis 4 Kohlenstoffatomen sind,
R¹⁰, R¹³ und R¹⁶ unabhängig voneinander eine Gruppe -L-R¹⁷ sind, worin
L = eine lineare oder verzweigte 2-bindige Alkylgruppe und
R¹⁷ = H oder -Si(R¹⁸)_{z}(OR¹⁹)_{3-z} mit R¹⁸, R¹⁹ = eine lineare oder verzweigte Alkylgruppe mit 1 bis 4 Kohlenstoffatomen und z = 0, 1, oder 2, bevorzugt z = 0, ist,
mit der Vorgabe, das mindestens einer der Reste R¹⁰ oder R¹³ und/oder mindestens eine Gruppe B eine Gruppe R¹⁷ = -Si(R¹⁸)_{z}(OR¹⁹)_{3-z} beinhaltet,
x unabhängig für eine ganze Zahl von 1 -20 steht, und
y unabhängig für eine ganze Zahl von 0-10 steht,
wobei bevorzugt x+y ≤ 20 ist,
und
(B') gegebenenfalls einen/einem oder mehrere/n Katalysatoren für die Vernetzung von Silangruppen,
wobei Komponente II durch eine wenigstens (≥) 5-stündige Lagerung einer Mischung aus C und D erhalten wird und
wobei in wenigstens einer der beiden Komponenten I und II mindestens ein Katalysator für die Vernetzung von Silangruppen (B bzw. B') enthalten ist, und B', sofern in Komponente II vorhanden, in der Mischung aus C und D zu Beginn von deren Lagerung bereits enthalten ist, oder der Mischung aus C und D während deren Lagerung beigemischt wird, oder ein Teil von B' in der Mischung aus C und D zu Beginn von deren Lagerung bereits enthalten ist und ein weiterer Teil während der Lagerung der Mischung beigemischt wird.

2. Zwei-komponentiges Beschichtungsmittel gemäß Anspruch 1, wobei das mindestens eine Polyisocyanat A1 ausgewählt ist aus der Gruppe bestehend aus monomeren Diisocyanaten mit aliphatisch, cycloaliphatisch, araliphatisch und/oder aromatisch gebundenen Isocyanatgruppen und durch Modifizierung von monomeren aliphatischen, cycloaliphatischen, araliphatischen und/oder aromatischen Diisocyanaten erhältlichen oligomeren Di- oder Polyisocyanaten mit Uretdion-, Isocyanurat-, Urethan-, Allophanat-, Thiourethan-, Thioallophanat-, Biuret-, Harnstoff-, Iminooxadiazindion- und/oder Oxadiazintrionstruktur.

3. Zwei-komponentiges Beschichtungsmittel gemäß Anspruch 1 oder 2, wobei das mindestens eine Polyisocyanat A1 ausgewählt ist aus der Gruppe bestehend HDI, PDI und oligomeren Di- oder Polyisocyanaten auf HDI- oder PDI-Basis.

4. Zwei-komponentiges Beschichtungsmittel gemäß einem der Ansprüche 1 bis 3, **dadurch gekennzeichnet, dass** die mindestens eine/r Polyisocyanatkomponente A auf einer mindestens einer gegenüber Isocyanatgruppen reaktiven Verbindung der allgemeinen Formel I (A2) basiert, in welcher
i)
R¹, R² und R³ jeweils Alkylreste mit bis zu 6 Kohlenstoffatomen und/oder Alkoxyreste, die bis zu 3 Sauerstoffatome enthalten, bedeuten, mit der Maßgabe, dass mindestens einer der Reste R¹, R² und R³ für einen solchen Alkoxyrest steht,
X für einen linearen oder verzweigten organischen Rest mit mindestens 2 Kohlen stoffatomen steht, und
R⁴ für einen gesättigten, linearen oder verzweigten, aliphatischen oder cycloaliphatischen Rest mit bis zu 6 Kohlenstoffatomen oder einen Rest der Formel 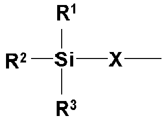 steht, in welchem R¹, R², R³ und X die vorstehend angegebene Bedeutung haben,
oder in welcher
ii)
R¹, R², R³ und X die unter i) genannte Bedeutung haben und
R⁴ für einen Rest der Formel 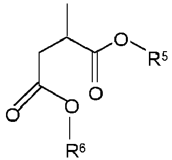 steht, in welcher
R⁵ und R⁶ unabhängig voneinander für einen Methyl-, Ethyl-, n-Butyl- oder 2-Ethylhexylrest stehen,
oder in welcher
iii)
R¹, R², R³ und X die unter i) genannte Bedeutung haben und
R⁴ für einen Rest der Formel 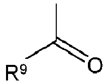 steht, in welcher
R⁹ für Wasserstoff oder einen gesättigten linearen oder verzweigten, aliphatischen oder cycloaliphatischen organischen Rest mit 1 bis 8 Kohlenstoffatomen steht.

5. Zwei-komponentiges Beschichtungsmittel gemäß einem der Ansprüche 1 bis 3, **dadurch gekennzeichnet, dass** die mindestens eine/r Polyisocyanatkomponente A auf einer mindestens einer gegenüber Isocyanatgruppen reaktiven Verbindung der allgemeinen Formel II (A2) basiert, in welcher
R¹, R² und R³ jeweils Alkylreste mit bis zu 6 Kohlenstoffatomen und/oder Alkoxyreste, die bis zu 3 Sauerstoffatomen enthalten, bedeuten, mit der Maßgabe, dass mindestens einer der Reste R¹, R² und R³ für einen solchen Alkoxyrest, bevorzugt für einen Methoxy- oder Ethoxyrest steht, und
Y für einen linearen oder verzweigten Alkylenrest mit 2 bis 10 Kohlenstoffatomen steht.

6. Zwei-komponentiges Beschichtungsmittel gemäß einem der Ansprüche 1 bis 5, **dadurch gekennzeichnet, dass** zur Herstellung der Polyisocyanatkomponente A das mindestens eine Polyisocyanate A1 mit der mindestens einen Isocyanat-reaktiven Verbindungen A2 bei Temperaturen von 20 bis 200 °C, vorzugsweise 30 bis 160 °C umgesetzt unter Einhaltung eines Äquivalentverhältnisses von Isocyanatgruppen zu gegenüber Isocyanaten reaktiven Gruppen von 50 : 1 bis 1,05 : 1, vorzugsweise von 30 : 1 bis 1,25 : 1, besonders bevorzugt 20 : 1 bis 1,5 : 1 umgesetzt wird.

7. Zwei-komponentiges Beschichtungsmittel gemäß einem der Ansprüche 1 bis 6, **dadurch gekennzeichnet, dass** der mindestens eine Katalysator für die Vernetzung von Silangruppen (B bzw. B') ausgewählt ist aus der Gruppe bestehend aus sauren Phosphorsäureestern, Phosphonsäureestern und Sulfonsäuren, die gegebenenfalls in mit Aminen blockierter Form vorliegen können, und Tetraalkylammoniumcarboxylaten.

8. Zwei-komponentiges Beschichtungsmittel gemäß einem der Ansprüche 1 bis 7, **dadurch gekennzeichnet, dass** die mindestens eine/r Hydroxylgruppen-haltige/n Verbindung C ausgewählt ist aus der Gruppe bestehend aus Polyesterpolyolen, Polyetherpolyolen, Polycarbonatpolyolen und Polyacrylatpolyolen.

9. Zwei-komponentiges Beschichtungsmittel gemäß einem der Ansprüche 1 bis 6, **dadurch gekennzeichnet, dass** Komponente II mindestens ein Alkoxysilyl-funktionelles Siloxan D der Formel (III) enthält, wobei
R¹¹, R¹² und R¹⁴ unabhängig voneinander für Methyl und/oder Ethyl, bevorzugt für Methyl stehen,
R¹⁰ und R¹³ unabhängig voneinander für eine Gruppe -L-R¹⁷ stehen, worin
L= eine lineare oder verzweigte 2-bindige Alkylgruppe, bevorzugt Ethylen, und
R¹⁷= -Si(R¹⁸)_{z}(OR¹⁹)_{3-z}, mit R¹⁸, R¹⁹= eine lineare oder verzweigte Alkylgruppe mit 1 bis 4 Kohlenstoffatomen und
z = 0, 1, oder 2, bevorzugt z= 0, und y= 0.

10. Verfahren zur Herstellung eines Beschichtungsmittels aus
einer ersten Komponente (I), enthaltend oder bestehend aus
(A) mindestens eine/r Polyisocyanatkomponente gemäß Beschreibung in Anspruch 1
(B) gegebenenfalls einen/einem oder mehrere/n Katalysatoren für die Vernetzung von Silangruppen,
und einer zweiten Komponente (II), enthaltend oder bestehend aus
(C) mindestens eine/r Hydroxylgruppen-haltige/n Verbindung,
(D) mindestens ein/em Alkoxysilyl-funktionelles/en Siloxan (III) gemäß Beschreibung in Anspruch 1
und
(B') gegebenenfalls einen/einem oder mehrere/n Katalysatoren für die Vernetzung von Silangruppen,
wobei in wenigstens einer der beiden Komponenten I und II mindestens ein Katalysator für die Vernetzung von Silangruppen (B bzw. B') enthalten ist,
**dadurch gekennzeichnet, dass**
die Komponenten C und D vollständig gemischt werden und die Mischung nach einer Dauer von mindestens (≥) 5 Stunden, als Lagerung bezeichnet, mit Komponente A, gegebenenfalls in Abmischung mit Komponente B, gemischt wird,
wobei B', sofern in Komponente II vorhanden, in der Mischung aus C und D zu Beginn der Lagerung bereits enthalten ist, oder der Mischung aus C und D während deren Lagerung beigemischt wird, oder ein Teil von B' in der Mischung aus C und D zu Beginn von deren Lagerung bereits enthalten ist und ein weiterer Teil während der Lagerung der Mischung beigemischt wird.

11. Zwei-komponentiges Beschichtungsmittel gemäß Anspruch 1, wobei Komponente II durch eine wenigstens (≥) 24-stündige Lagerung einer Mischung aus C und D erhalten wird, oder Verfahren zur Herstellung eines Beschichtungsmittels gemäß Anspruch 10, wobei die Mischung der Komponenten C und D nach einer Dauer von mindestens (≥) 24 Stunden, mit Komponente A, gegebenenfalls in Abmischung mit Komponente B, gemischt wird.

12. Verfahren zur Herstellung einer Beschichtung auf einem Substrat, umfassend
- das Aufbringen eines nach dem Verfahren gemäß Anspruch 10 oder 11 erhältlichen Beschichtungsmittels auf ein Substrat,
- die thermische Härtung des Beschichtungsmittels.

13. Verfahren gemäß Anspruch 12, wobei es sich bei den Beschichtungen um Klarlacke oder Decklacke handelt.

14. Verfahren gemäß Anspruch 12 oder 13, wobei es sich bei den Substraten um harte oder flexible Kunststoffe handelt, insbesondere um Kunststoffe für die Verwendung im Bereich der Automobilindustrie.

15. Beschichtete Substrate erhältlich nach einem Verfahren gemäß einem der Ansprüche 12 bis 14.
